# EUROPEAN PATENT APPLICATION

(11) **EP 1 860 544 A1**
(43) Date of publication of application: **28.11.2007**
(21) Application number: 07107758.0
(22) Date of filing: 08.05.2007
(51) Int. Cl.: G06F 3/12, G06F 17/24

(54) **Automated job submitter for submitting a print job to a printer**

(30) Priority: 22.05.2006 EP 06300503
(71) Applicant: Océ-Technologies B.V., 5914 CA Venlo (NL)
(72) Inventor: Appercel, Stéphane P.R., Massy 91300 (FR); Noureddine, Nadim, Vincennes 94300 (FR)
(74) Representative: van Meeteren, Arend Anthonie

(57) **Abstract**

The invention relates to a method for processing a document comprising image data to be printed, comprising analysing the document and identifying image attributes based on the analysis of the document. The method further comprises automatically assigning appearance features to the document according to pre-defined rules which take into account the identified image attributes for assigning the appearance features; acquiring a description of print resources of at least one printing apparatus; automatically assigning print settings to the document, whereby the assigned print settings are suited for activating print resources of the at least one printing apparatus which enable printing of the image data with an appearance consistent with the assigned appearance features.

## Description

The present invention relates to a method for processing a document comprising image data to be printed, comprising analysing the document and identifying image attributes based on the analysis of the document.

A method for processing digital documents has, for example, been disclosed by a publication in Research Disclosure of September 2001, page 1506, ref. No. 449055: 'Proposal to configure a printer driver for customised formatting/finishing of print jobs'. According to this publication, a printer driver window includes a plurality of buttons representing templates, each of them being associated with a pre-defined set of print settings. Although such templates add to the comfort of a user by providing consistent sets of print settings that may be individually chosen by simply clicking a button, printing a set of documents of heterogeneous nature remains fastidious. For example, in the context of printing archived technical drawings, it is common practice to print a set of documents related to a given assembly. Often, these documents are related to the same subject for the user, but are of heterogeneous nature. For instance, when the user wants to print all documents related to a certain mechanical sub-assembly, the resulting set of documents may contain large format and small format technical drawings, some of them holding colour information and other being monochrome, along with small format text documents for the technical specifications etc. With the known method, printing a set of documents of heterogeneous nature requires the user to examine each document, for example by previewing it and select the desired template. If the user selects a template that is not appropriate for the document to be printed, the paper output is wasted and the document needs to be reprinted by selecting another template.

The object of the present invention is to improve a method for processing digital documents such that a set of heterogeneous selected documents may be printed by at least one printing apparatus with no user interaction, once the documents are selected by the user for automated print job submission.

This object is achieved by a method which comprises automatically assigning appearance features to the document according to pre-defined rules which take into account the identified image attributes for assigning the appearance features; acquiring a description of print resources of at least one printing apparatus; automatically assigning print settings to the document, whereby the assigned print settings are suited for activating print resources of the at least one printing apparatus which enable printing of the image data with an appearance consistent with the assigned appearance features.

The invention also relates to an apparatus for processing digital documents, comprising a job submitter for submitting at least one digital document to at least one printing apparatus as a print job, a document analyser for analysing the document and identifying image attributes based on the analysis of the document, a template manager for automatically assigning appearance features to the document according to pre-defined rules which take into account the identified image attributes for assigning the appearance features, whereby the job submitter is configured for acquiring a description of print resources of at least one printing apparatus and automatically assigning print settings to the document, whereby the assigned print settings are suited for activating print resources of the at least one printing apparatus which enable printing of the image data with an appearance consistent with the assigned appearance features.

The invention further relates to a computer program product residing on a computer readable medium.

The invention is elucidated by reference to one embodiment in conjunction with Figure 1, Figure 2 and Figure 3.
Fig. 1 shows a network system of workstations and printers.
Fig. 2 shows a schematic functional view of an apparatus according to an embodiment of the invention.
Fig. 3 shows a flowchart diagram for carrying out the method according to an embodiment of the invention.

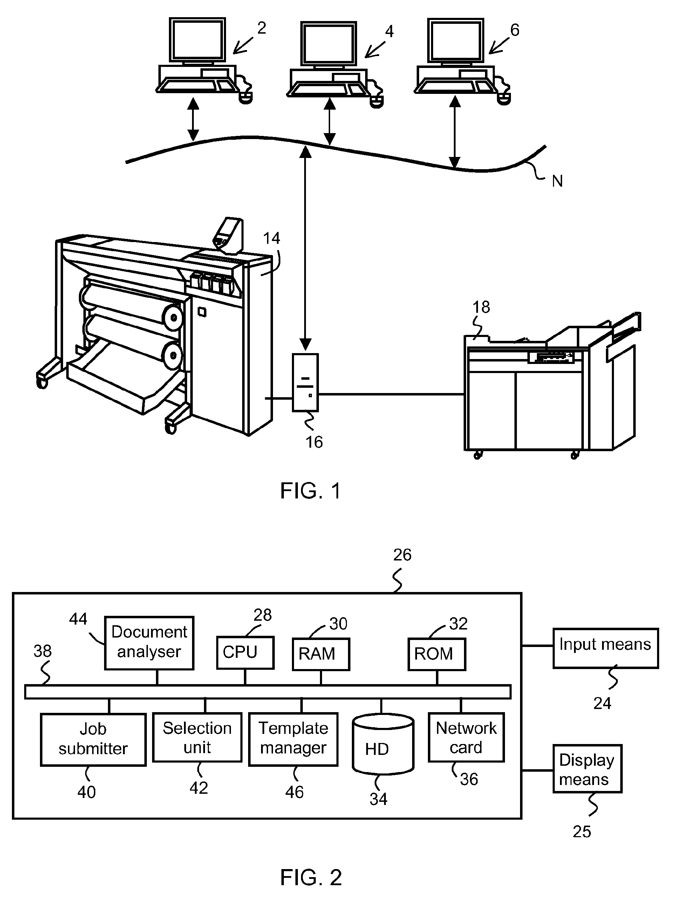

Fig. 1 shows a system comprising workstations 2, 4, and 6 connected to a local network N. The method according to an embodiment of the invention is particularly suited for use in this kind of environment, where many print engines are available for a user working on one of the workstations and intending to print a set of documents. The print engines 14 and 18 share the resources of the print server 16, the print server 16 which is connected to the network N and is suited for receiving print jobs from the workstations and for transmitting print data to the print engines.

Each of the workstations is for example a PC provided with a processor unit, a display unit, a keyboard and a mouse or any other input means. In order to enable a user logged on a workstation to print a document on a print engine, the workstation is provided with a so-called job submitter. A job submitter is an application controlled by the processor unit and is able to perform the task of submitting digital documents to a print server or a printing apparatus as a print job. Print settings may be inserted in a job ticket included in a print job. When a user wants to print one or more digital documents stored on memory means of a workstation or created by an application program running on the workstation, he or she calls up the job submitter, for example by clicking an icon intended for this purpose. An interface is displayed which enables the user to select, by means of a browser for example, the one or more digital documents to be printed.

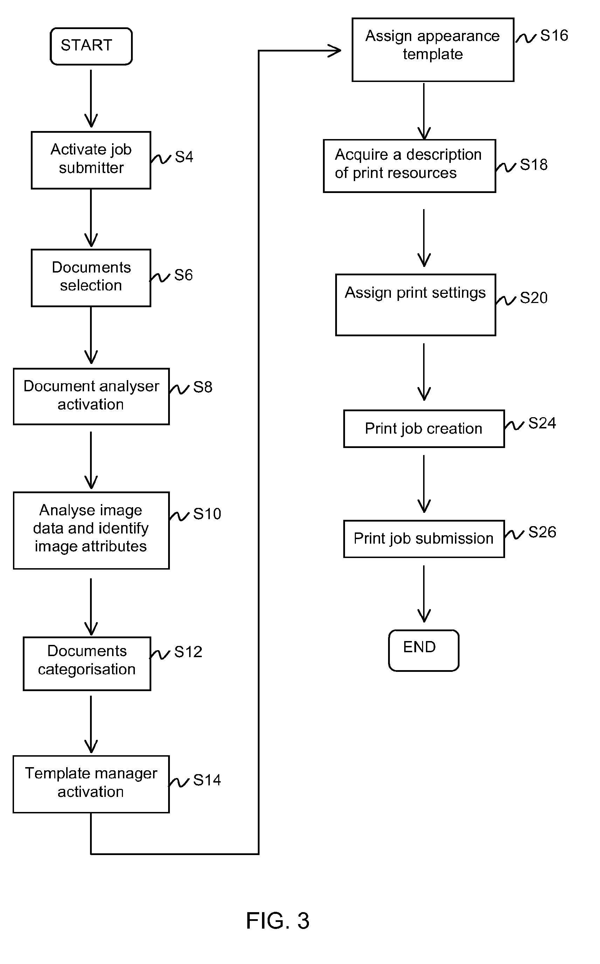

According to the present invention, an appearance template is automatically associated to each one of the documents to be printed by means of a template manager as is described hereinafter in conjunction with Fig. 2 and Fig. 3. An appearance template is thus associated to each one of the documents to be printed, and subsequently, print settings are automatically assigned to each one of the documents. The job submitter then submits the created print job to the print server to which one or more printers are connected. The print job may be split towards different print queues in the event that the documents are to be printed by distinct print engines. The print server receiving the print job is provided with a raster image processor (RIP). The RIP interprets the print job, i.e. it examines print job data sent from the workstation and identifies the command embedded in the data, such as printer control, page format, font management, text layout and graphics. The RIP then converts the received commands into an array of dots to be rendered by the print engine.

Fig. 2 is a schematic diagram of an apparatus 26 for submitting print jobs to a printing apparatus. The apparatus 26 may be implemented as one of the workstations 2, 4 or 6 as explained above, or on the print server 16. The apparatus 26 comprises a Central Processing Unit (CPU) 28, a Random Access Memory (RAM) 30, a Read Only Memory (ROM) 32, a hard disk (HD) 34, a network card 36, a job submitter 40, a selection unit 42, a document analyser 44, and a template manager 46. The network card 36 connects the apparatus 26 to the network N and is designed to provide communication with other devices such as other workstations, the print server 16 and print apparatuses. The aforementioned units are interconnected through a bus system 38.

The CPU 28 controls the respective units of the apparatus 26 in accordance with control programs stored on the ROM 32 or on the HD 34. The CPU 28 also controls computer programs required to execute processes shown in the flowchart of Fig. 3 to be described hereinafter. The ROM 32 stores programs and data such as boot program, set-up program, various set-up data or the like, which are to be read out and executed by the CPU 28. The hard disk 34 is an example of a storage unit for storing and saving programs and data which make the CPU 28 execute the method for printing digital documents according to the invention. The programs and data on the HD 34 are read out onto the RAM 30 by the CPU 28 as needed. The RAM 30 has an area for temporarily storing the programs and data read out from the ROM 32 and the HD 34 by the CPU 28, and a work area which is used by the CPU 28 to execute various processes.

The job submitter 40, the selection unit 42, the document analyser 44 and the template manager 46 may be implemented as software components of an operating system running on the apparatus 26. The job submitter 40 has functions for creating a print job in co-operation with the other units and submitting the print job to a print server or a printing apparatus, in accordance with an embodiment of the invention. The selection unit 42 has a function for enabling a user to select the digital documents to be printed. The document analyser 44 has functions for analysing the content of a digital document to be printed, for identifying its image attributes and for categorising said document. The template manager 46 has functions for selecting an appearance template from an existing list of appearance templates and for associating an appearance template to the document to be printed. The job submitter is configured for acquiring a description of print resources of at least one printing apparatus and automatically assigning print settings to the document, whereby the assigned print settings are suited for activating print resources of the at least one printing apparatus which enable printing of the image data with an appearance consistent with the assigned appearance features.

The method according to one embodiment of the invention is now explained with reference to the flow chart diagram of Fig. 3.

A document is an application file which comprises image data to be printed. The application file may be any file that is compatible with the job submitter 40. The application file may consist of a word-processing file, a computer-assisted drawing (CAD) file, a page description language (PDL) file or the like. In step S4, a user logged on a workstation, wishing to print a plurality of digital documents activates a job submitter 40 which is an application running on the workstation. This can be done, for example, by clicking an icon intended therefore in the application window displayed on the workstation's monitor. The selection unit 42 which is for example a browser is thereby activated. In step S6, documents to be printed are selected by the user, for example by clicking icons representing documents in a browser window. Typically, documents to be printed are resident on the hard disk unit 34 of the workstation, or are stored elsewhere in the network environment. For example, the user selects a first document **'doc1'** and second document **'doc2**'. When the user has finished the selection of all documents he or she wishes to print, the user may click a button 'auto-behaviour' in the job submitter application window. Some application files may first have to be converted into a PDL, which is a language suited for providing instructions for printing the document to a printing apparatus as bit-mapped graphics or vector graphics. However, this is not required for all types of application files. Then, the document analyser is activated in step S8. In step S10, the image data of each selected document is analysed by the document analyser 44. Based on the analysis of the image data, image attributes are identified. The aim of the analysis in step S10 is thus to identify image attributes of the image data of each document. Examples of image attributes are the file format, the sizes (s) of the document images (s), the content type (text, graphics, bitmap image etc), the orientation of the images, whether there is colour content, the location of the legend (for technical drawings) etc. In step S10, an interpretation function of the document analyser 44 carries out the step of interpreting the image data and identifies image attributes.

Detecting the size of a document, for example, can be done through an interpretation of the document data. Depending on the data format, partial or complete interpretation is carried out in step S10. For documents having a raster data format such as TIFF, JPEG, NIRS, CALS or RTL, partial interpretation is sufficient. For documents having vector data formats such as HP-GL, HP-GL/2, Postscript or Calcomp, a full interpretation is required, unless an optional page size information is found in the document data. For a PDF or a PDL document, partial interpretation is performed, which is enough to retrieve the size of the document. For example, commands and graphics that do not contain relevant information related to the image attributes are not interpreted by the document analyser 44. Moreover, compressed images need not be fully decompressed, since the colour information is available in the header of the document file.

If the format of the document allows it, the information required for identifying the image attributes of the image data are read by the document analyser 44 at a specific location in the file. In this case, the interpretation performed by the document analyser is limited to a part of the image data.

As an alternative, the image attributes of the image data may be obtained directly from meta-data attached to the digital document by a document archiving solution software. In this case, only the meta-data needs to be interpreted by the document analyser.

During the interpretation, the image attributes of the image data are thus identified. For example, the first document **'doc1'** may have the following identified image attributes: its size is 'Size1', it contains graphics, it contains colours and the legend is located at a position corresponding to the plot layout standard DIN. Similarly, for each one of the selected documents, a plurality of image attributes are identified. The second document **'doc2'** may have the following identified attributes: its size is 'Size4', it contains text only, it is a monochrome image, and the document contains two pages. For instance, 'Size1' corresponds to the standard size A1 and 'Size4' corresponds to the standard size A4 (ISO 216).

Based on the identified image attributes, a category is assigned to each one of the selected documents in step S12. Categories are pre-defined and are characterised by a set of image attributes. A list containing a description of the attributes belonging to the pre-defined categories is stored on the HD 34. In step S12, the image attributes identified for each selected document are compared by the document analyser 44 with the attributes included in the pre-defined categories. When there is a match, a category is assigned to the document. For example, a category **'drawing D1'** could be assigned to the first document **'doc1',** since the predefined category **'drawing D1'** contains the attributes Size1, graphics, colour, and DIN. A category **'spec'** could be assigned in step S14 to the second document **'doc2'**, since the predefined category **'spec'** contains the attributes Size4, text, monochrome, and several pages.

In order to assign a category to a selected document in step S12, the match does not have to be exact. Rules may be defined in order to categorise a document even if the match between the documents attributes and the attributes included in the predefined categories is not perfect. For example, the predefined categories 'drawing D1', 'drawing D2' and 'drawing D3' could be characterised, respectively, by the sizes Size1 (corresponding to the standard size A1), Size2 (corresponding to the standard size A2) and Size3 (corresponding to the standard size A3). Each of these categories is moreover characterised by the attributes 'graphics', 'colour' and 'DIN'. If it occurs that the identified size of a document is between Size3 and Size2, then the category that is assigned to the document will be 'drawing D2', supposing that the other identified attributes such as graphics, colour and DIN match perfectly the other attributes contained in the categories 'drawing D1', 'drawing D2' and 'drawing D3'. Other rules could be defined regarding the rules for obtaining a match between the identified attributes and the attributes defining a category.

In step S14, the template manager 46 is activated. In step S16, the template manager 46 assigns appearance features to the document according to pre-defined rules which take into account the category. An appearance feature expresses how a printed image should look like, according to user's preference or a department or a corporate preferred layout. Appearance features may be collectively defined in a so-called appearance template. Appearance templates are pre-defined and a list of pre-defined appearance templates is available for the template selector. The list, comprising for example the appearance templates AT1, AT2, AT3 and AT4 may be stored on the HD 34. The appearance templates are pre-defined, i.e. they have been created prior to the activation of the job submitter (S2). Creating an appearance template consists in defining a media format and an image layout reference for this particular template; defining a media type and margins for this particular template; defining stamps and watermarks for this particular template; defining how the image is laid out on the media for this particular template; defining how stamps and watermarks are laid out on the drawing and on the media; defining the finishing options etc. For example, AT1 specifies that a document should be printed on a medium having the A1, be folded (Fold Full), be punched at the leading edge etc. AT4 specifies that a document should be printed on A4-sized medium, be watermarked, be bound along the long edge, etc.

In order to assign a pre-defined appearance template (i.e. a set wherein appearance features are collectively defined) based on the assigned category, the template manager 46 may use rules which consist of mapping the assigned category to an appearance template from the existing list of pre-defined appearance templates. This is conveniently implemented in a look-up table representing the mapping, such as shown in Table 1. In the present example wherein the documents **'doc1'** and **'doc2'** belong to the categories **'drawing D1'** and '**spec'**, respectively, the template manager, based on the look-up table, assigns the appearance template **AT1** to the document **'doc1'** and the appearance template **AT4** to the document **'doc2'**, based on their category, i.e. based on their respective image attributes.

**Table 1**

| Assigned Category | Assigned appearance template |
|---|---|
| drawingD1 | AT1 |
| drawingD2 | AT2 |
| drawingD3 | AT3 |
| spec | AT4 |

In step S18, the job submitter 40 acquires a description of print resources of the printing apparatuses 14 and 18. Print resources represent print features of a printing apparatus which are available on said printing apparatus and are related to the print process of a document. For example, a description of print resources of a printing apparatus comprise the available print media, the size thereof, the selection of fonts, the resolution of the printing process, the colour mode and finishing options such as staples and the like. Acquiring a description of the print resources by the job submitter 40 may require interrogation of the printing apparatuses via the network.

In step S20, the job submitter 40 assigns print settings to the documents **'doc1'** and **'doc2'**. The assigned print settings are suited for activating print resources of any of the printing apparatuses 14 and 18 which enable printing the image data with an appearance consistent with the assigned appearance features. In the case that one of both printing apparatuses 14 and 18 has print resources which enable printing the document **'doc1'** such that the appearance of the printed image perfectly matches the assigned appearance features (collectively described in the appearance template AT1), print settings are assigned accordingly. The assigned print settings are for example 'Tray1' (containing a print medium having the size A1), 'Fold Full', 'Punch' etc. The job submitter 40 may do this by creating a job ticket containing said print settings and attaching it to the document **'doc1'.** The job ticket contains the destination printer, which is the printer which has the most suitable print resources for printing the document. For example, a job ticket is created for the document **'doc1',** with print settings of printing apparatus 14 which is the destination printer. On the other hand, it could happen that none of the available printing apparatuses has print resources which enable printing the document **'doc2'** such that the appearance of the printed image perfectly matches the assigned appearance features (collectively described in the appearance template AT4). In this case, the job submitter 40 assigns print settings that are suited for activating print resources of one the printing apparatuses which enable printing the image data of the document **'doc2'** with an appearance resembling as much as possible the assigned appearance features. The assigned print settings are for example 'Tray 2' (containing A4-sized medium), 'Watermark' and 'Bind short edge' (since the print setting 'bind along the long edge' is not available in any printing apparatus) etc. A job ticket is created for the document **'doc2',** with print settings of printing apparatus 18 which is the destination printer.

In step S24, the print job is created by the job submitter 40. The print job comprises the document **'doc1'** with its job ticket and the document **'doc2'** with its job ticket wherein the print settings and destination printer are described.

In step S26, the print job is submitted by the job submitter via the network connection to the print server 16. A raster image processor (RIP) installed on the print server 16 interprets the print job, i.e. it examines the received print job data and identifies the command embedded in the data, such as printer control, page format, font management, text layout and graphics. The RIP finally converts the received commands into an array of dots (bitmap) to be rendered by the print engines. The bitmap is finally transmitted to one of the available printing apparatuses for being printed by the image forming element thereof, such as an inkjet print head or the like. The document **'doc1'** is printed on the printing apparatus 14 and the document **'doc2'** is printed on the printing apparatus 18, each according to the assigned print settings. Then, the program ends, as shown in Fig. 3.

Another method for processing digital documents comprises the steps of submitting at least one digital document to at least one printing apparatus as a print job provided with a set of print settings, wherein the print settings are collectively specified in the form of a template being a set of print settings, examining the content of the digital document, identifying document attributes based on the content and categorising the digital document based on the document attributes, selecting a template from an existing list of templates based on the document category and associating the selected template to the digital document for creating the print job. A set of heterogeneous selected documents may be printed by at least one printing apparatus with no user interaction, once the documents are selected by the user for automated print job submission. The user who wants to print at least one digital document only has to make a document selection, and the method allows the document to be automatically submitted to a printing apparatus with the most adequate print settings. Moreover, in the case that several printers are connected to the local network on which the user is working, the user does not even has to specify on which printer each one of the selected documents has to be printed. Since each template is a set of print settings based on the capabilities of a given printing apparatus, each document will be sent to the most adequate printer, based on the template associated to the document, according to the content of the document.

The method may comprise the step of at least partially interpreting the document in order to identify document attributes. This is a convenient way of retrieving the documents attributes such as the number of pages, and for each page, the size, the image resolution, whether the documents contains colour or is monochrome etc. For efficiency reasons, each one of the selected documents should be interpreted as little as possible.

The method may comprise the step of reading meta-data attached to the document in order to identify document attributes.

For example, in the step of identifying document attributes, the document attributes are chosen from the group comprising document image size, document file format, content type, orientation of the image, colour content, location of a legend.

An apparatus for processing digital documents comprises a job submitter for submitting at least one digital document to at least one printing apparatus as a print job provided with a set of print settings, wherein the print settings are collectively specified in the form of a template being a set of print settings and a selection unit for enabling a user to select the at least one document to be printed, a document analyser for examining the content of the digital document, identifying document attributes based on the content and categorising the digital document based on the document attributes, and a template manager for selecting a template from an existing list of templates based on the document category and associating the selected template to the digital document for creating the print job. For example, the document analyser has a function for at least partially interpreting the document in order to identify document attributes.

Once each of the selected documents has been categorised, a template manager is activated. The template manager has access to a list of print templates, a print template being a pre-stored set of print settings. Each print template is defined as a coherent set of print settings, the set being based on capabilities of a specific printer connected through the network N to the workstation on which the user is logged. In the example of Fig. 1, a user logged on one of the workstations 2, 4, 6 has the possibility to have his or her documents printed on the printers 14 or 18. In this example, the list of print templates to which the template manager has access comprises print templates suited for the print engine 14 and print templates suited for the print engine 18. Print settings are printing parameters that command the final aspect of the printed documents. Print settings may be classified in groups, for example: 'layout', 'medium', 'finishing', 'image'.

The print settings in the group 'layout' describe how the document image should be positioned on the print medium. The print settings in this group are for example related to the orientation of the image (landscape or portrait), to the positions of the margins, to the position of the binding edge, whether the printed document is 1-sided or 2-sided etc.

The print settings in the group 'medium' describe on which print medium the document should be printed. The print settings in this group are for example related to the size and the paper type to be used to print the document.

The print settings in the group 'finishing' describe how the document should be bound and delivered at the print engine. For example, the print settings in the group may specify a staple option, a specific output bin of the print engine, whether the sheet should be cut etc.

The print settings in the group 'image' describe how the document image should be rendered on the print medium. The print settings in this group are for example related to the resolution (rough or fine image quality), to colour or monochrome printing, to the presence of a watermark on top of the document image, image transformation such as mirroring or inversion, scaling etc.

By way of example, Table 1 details four print templates, whereby templates T1 and T2 are set of print settings based on the capabilities of the printers 14 and templates T3 and T4 set of print settings based on the capabilities of the printer 18. For the sake of clarity, only four print settings are illustrated for each template. However, a template may contain many more print settings, with several print settings in each group.

| | T1 | T2 | T3 | T4 |
|---|---|---|---|---|
| layout | landscape | portrait | 1-sided | 2-sided |
| medium | plain | glossy | A3 | A4 |
| finishing | Cut | cut | No staple | Staple |
| image | watermark | Scale 120% | rough | fine |

In a next step, the template manager module 46 selects a print template from the existing list of print templates T1, T2, T3, T4 based on the category of each of the selected documents to be printed. The rules for the selection are pre-established: for each category of document, a selection rule establishes the print template to be selected. For example, if the first selected document to be printed is in the category 'drawing D1', the print template manager selects the template T1. In this rule given as an example, the print template T1 is associated to each document categorised in the category 'drawing D1', since the attributes 'DIN' (for the drawing standard) and 'size1' (for the image size) imply a layout print setting related to the orientation 'landscape'. This has the advantage that a user does not have to remember every time that a 'DIN' drawing with the size 'size1' is selected for printing, that the print setting layout should be 'landscape'. The method recognises a category and automatically associates the right template, according to pre-defined rules.

In a next step, the template manager associates the selected print template to the document to be printed. For example, the print template T1 is associated to the first document 'document 1'. Since the print template T1 is a set of print settings based on the capabilities of the printing apparatus 14, the first document 'document 1' will be submitted to the printing apparatus 14. The user only needs to submit documents to be printed to the job submitter and doesn't have to specify on which printing apparatus the documents should be printed. Indeed, based on the document category which is recognised by the document analyser, a print template is associated to the document to be printed. Since a print template is a set of print settings based on the capabilities of a given printing apparatus connected to the network N, the user does not have to choose explicitly a destination print engine: for each one of the selected document, the print engine is designated in the associated template.

In a next step, the template manager module carries out a test to check whether the document to which the template has been associated was the last of the selected documents. If the answer is no, the steps above are repeated. The second selected document 'document2' belongs to the category 'spec', as recognised by the document analyser. According to a predefined rule, the template selector always selects the template T4 for this category 'spec'. The template T4 is thus selected and associated to the document 'document2'. If the answer of the test is yes, a print job is created by the job submitter. To create a print job, the job submitter inserts the print settings of each document to be printed in a job ticket In a next step, the job ticket together with the data of each digital document to be printed is submitted to the printing apparatus as a print job. This is the end of the print job submission process.

Once the print job is received by the print server 16, images for printing purposes are prepared. Firstly, a split function installed on the print server 16 directs the documents to be printed by the print engine 14 towards a first print queue and the documents to be printed by the print engine 18 towards a second print queue. The splitting is based on the information contained in the job ticket. Since each of the print templates is a coherent set of print settings based on the capabilities of a given printer, the documents can be split based on the print template associated to said document, for example T1, T2, T3 or T4. The document 'document 1' to which the template T1 is associated is sent to the first print queue, i.e. it will be printed by the print engine 14. The document 'document 2' to which the template T4 is associated is sent to the second print queue, i.e. it will be printed by the print engine 18.

Secondly, the raster image processor (RIP) interprets the print job, i.e. it examines the received print job data and identifies the command embedded in the data, such as printer control, page format, font management, text layout and graphics. The RIP finally converts the received commands into an array of dots (bitmap) to be rendered by one of both print engines. The bitmap is finally transmitted to the print engine for being rendered by the image forming element thereof, such as an inkjet print head or the like.

For convenience, the capabilities and status of each print engine connected via the local network N may be retrieved and maintained up to date by the system shown for example in Fig. 1, by using bi-directional communication with each printer. For example, if one of the printers becomes unavailable, a number of templates could become unavailable. That implies that if a document is categorised in a category for which no template is available, a signal could be given to the job submitter in order to find an approximate match with another category for which a template is available, so that the document may be submitted to a working printer. A similar solution is possible in the case that one of the printer resources becomes unavailable. For example, if a paper tray is empty, the template with the print settings corresponding to said paper tray would become unavailable. The job submitter would have to find an approximate size match, so that an available template could be associated with the recognised category.

## Claims

1. Method for processing a document comprising image data to be printed, comprising analysing the document;
and identifying image attributes based on the analysis of the document, **characterised in that** the method further comprises
automatically assigning appearance features to the document according to pre-defined rules which take into account the identified image attributes for assigning the appearance features;
acquiring a description of print resources of at least one printing apparatus; automatically assigning print settings to the document, whereby the assigned print settings are suited for activating print resources of the at least one printing apparatus which enable printing of the image data with an appearance consistent with the assigned appearance features.

2. Method for processing a document according to claim 1, wherein analysing the image data consists in at least partially interpreting the image data.

3. Method for processing a document according to claim 1 or 2, comprising assigning a category to the document based on the identified image attributes.

4. Method for processing a document according to claim 3, wherein assigning appearance features to the print job is done by selecting an appearance template in which appearance features are collectively defined from an existing list of pre-defined appearance templates, the selection being done according to the pre-defined rules.

5. Method for processing a document according to claim 3 and 4, wherein the selection done according to the pre-defined rules consists of mapping the assigned category to an appearance template from the existing list of pre-defined appearance templates.

6. Method for processing a document according to any of the preceding claims, wherein in the step of identifying image attributes based on the step of at least partially interpreting the image data, the image attributes are chosen from the group comprising image size, content type, orientation of the image, colour content, location of a legend.

7. Method for processing a document according to any of the preceding claims, wherein in the step of identifying image attributes based on the step of at least partially interpreting the image data, meta-data attached to the image data is read in order to identify image attributes.

8. Method for processing a document according to any of the preceding claims, wherein acquiring a description of available print resources is done for a plurality of printing apparatuses, further comprising selecting a printing apparatus among the plurality of printing apparatuses, based on the available print resources which enable printing the image data with appearance features at most consistent with the assigned appearance features.

9. Apparatus (26) for processing digital documents, comprising a job submitter (40) for submitting at least one digital document to at least one printing apparatus (14, 18) as a print job, a document analyser (44) for analysing the document and identifying image attributes based on the analysis of the document, a template manager (46) for automatically assigning appearance features to the document according to pre-defined rules which take into account the identified image attributes for assigning the appearance features, whereby the job submitter (40) is configured for acquiring a description of print resources of at least one printing apparatus and automatically assigning print settings to the document, whereby the assigned print settings are suited for activating print resources of the at least one printing apparatus which enable printing of the image data with an appearance consistent with the assigned appearance features.

10. Apparatus for processing digital documents according to claim 1, wherein the document analyser has a function for at least partially interpreting the document in order to identify document attributes.

11. Computer program product residing on a computer readable medium comprising instructions for causing at least one process unit to perform the steps of the method of any of the claims 1 to 8.
